# EUROPEAN PATENT APPLICATION

(11) **EP 1 630 455 A2**
(43) Date of publication of application: **01.03.2006**
(21) Application number: 05107597.6
(22) Date of filing: 18.08.2005
(51) Int. Cl.: F16H 9/18, F16H 61/662

(54) **Transmission gear with variable pulley**

(30) Priority: 27.08.2004 JP 2004249301
(71) Applicant: Honda Motor Co., Ltd., Tokyo (JP)
(72) Inventor: Tsukada, Yoshiaki, c/o K. K. Honda Gijutsu, Wako-shi, Saitama (JP); Ozeki, Takashi, c/o K. K.Honda Gijutsu, Wako-shi, Saitama (JP); Nakamura, Kazuhiko, c/o K. K. Honda Gijutsu, Wako-shi, Saitama (JP)
(74) Representative: Quinterno, Giuseppe

(57) **Abstract**

A V belt type automatic transmission includes a driven pulley composed of a fixed sheave (31) and a movable sheave (32), and a torque cam mechanism (50) operating by an operational torque and which generates a thrust (F) in the direction for tightening a belt (26) at the time of a variation in torque. The torque cam mechanism (50) includes a first cam element (52) of a cam body (51) rotatable relative to both the sheaves (31, 32), and a second cam element (53) of the movable sheave (32). Both the sheaves (31, 32) are relatively non-rotatably coupled by splines (37, 38), and an operational torque is a torque obtained by summing up a first torque component transmitted from the belt (26) to the fixed sheave (31) and a second torque component transmitted from the belt (26) to the movable sheave (32).

## Description

The present invention relates to a transmission gear with a variable pulley whose belt wrapping radius is variable, the transmission gear being, for example, a belt type transmission equipped in a vehicle or the like.

As a transmission gear with a variable pulley, for example, a belt type automatic transmission for a motorcycle disclosed in Japanese Patent Laid-open No. HEI 10-318 342 includes a drive pulley rotationally driven by an internal combustion engine, a driven pulley drive-connected to a rotary shaft drive-connected to a rear wheel, a belt wrapped around both the pulleys, a spring for exerting a springy force in the direction for tightening the belt on a movable pulley half of the driven pulley, and a torque cam mechanism for exerting on the movable pulley half a thrust which has a magnitude according to an input torque transmitted from the belt to the driven pulley and which is in the direction for tightening the belt. The movable pulley half of the driven pulley is slidably supported on a fixed pulley half which is rotatable as one body with the rotary shaft. In addition, the torque cam mechanism is composed of a movable-side cam portion provided in the movable pulley half, and a fixed-side cam portion provided in a drive plate of a centrifugal type clutch which is normally rotated as one body with the fixed pulley half.

Besides, at the time of a variation in torque between the driven pulley and the rotary shaft, the torque cam mechanism generates a thrust by utilizing the relative rotation generated between the fixed pulley half and the movable pulley half, and moves the movable pulley half in the direction for tightening the belt by the thrust, thereby to increase the force for tightening the belt by the driven pulley and to increase a side pressure exerted on the belt.

Meanwhile, in the related art mentioned above, the thrust for moving the movable pulley half at the time of a variation in torque between the driven pulley and the rotary shaft is obtained based on the relative rotation of the fixed pulley half and the movable pulley half, so that a slip against a frictional force is generated between the belt and the fixed pulley half and the movable pulley half due to the relative rotation. Therefore, the efficiency of transmission of the input torque between the belt and the driven pulley may be lowered in some cases.

In addition, the input torque is bisected into a first torque component which is transmitted to the fixed pulley half and a second torque component which is transmitted to the movable pulley half, only the second torque component (in magnitude, roughly half of the input torque) of the input torque acts on the torque cam mechanism, and the magnitude of the thrust generated by the torque cam mechanism is a magnitude according to the second torque component, so that it is difficult to increase the thrust. When the thrust is small, the force of tightening the belt by the driven pulley becomes small at the time of a torque variation, and it is difficult to largely reduce the slip between the belt and the driven pulley.

Furthermore, where the thrust generated by the torque cam mechanism is small, in order to obtain a necessary tightening force which is a tightening force necessary for exerting on the belt a side pressure at a required magnitude from both the pulley halves for securing a good efficiency of transmission of the input torque from the belt to the driven pulley, it is necessary to increase the spring load exerted on the movable pulley half by the spring. When the spring load is set large, however, the tightening force and, hence, the side pressure acting on the belt may become excessively large at a portion where a considerably high necessary tightening force is not required within the variation range of the wrapping radius.

Besides, since the connection portion for connection with the drive plate which is provided in the fixed pulley half so as to rotate the fixed pulley half as one body with the rotary shaft is located at substantially the same position as the torque cam mechanism in the axial direction, the distance between the connection portion and the belt in the axial direction becomes large, and the torsion of the fixed pulley half becomes large, resulting in that the delay in transmission of the input torque from the driven pulley to the rotary shaft is enlarged, and the input torque transmission response performance is lowered.

The present invention has been made in consideration of the above-mentioned circumstances.

It is an object of the inventions as set forth in claims 1 to 7 to contrive enhancement of the efficiency in transmission of an input torque from a belt to a variable pulley provided in a transmission gear at the time of a variation in torque from the variable pulley to a rotary shaft. It is another object of the inventions as set forth in claims 3 and 6 to simplify the structure of a torque cam mechanism, and it is a further object of the inventions as set forth in claims 4, 5 and 7 to enhance the transmission response performance of the input torque transmitted from the movable pulley to the rotary shaft in the transmission gear with the torque cam mechanism.

The invention as set forth in claim 1 resides in a transmission gear comprising a variable pulley comprised of a first sheave and a second sheave, a rotary shaft drive-connected to the variable pulley, and a thrust generating means for generating a thrust in the axial direction according to an operational torque transmitted through the variable pulley on the basis of an input torque transmitted from a belt clamped by the first sheave and the second sheave to the variable pulley, the thrust generating means moving at least either of the first sheave and the second sheave in the direction for tightening the belt by the thrust at the time of a variation in torque between the variable pulley and the rotary shaft, wherein the first sheave and the second sheave are not rotatable relative to each other, and are drive-connected to the rotary shaft through the thrust generating means.

According to this, the first and second sheaves are not rotatable relative to each other, so that the operational torque for operating the thrust generating means for generating a thrust for moving either of the first and second sheaves in the direction for tightening the belt at the time of a variation in torque is based on the input torque transmitted through both of the first and second sheaves which are not rotatable relative to each other. Therefore, the thrust generated by the thrust generating means can be increased, as compared with a thrust generated by the related-art torque cam mechanism to which the operational torque is transmitted through either of the first and second sheaves due to the relative rotation of the first sheave and the second sheave. Accordingly, the tightening force and, hence, the side pressure acting on the belt when at least either of the first and second sheaves is moved in the direction for tightening the belt (hereinafter referred to as "the tightening direction") at the time of a variation in the torque can be increased, and the slip between the belt and the first and second sheaves at the time of a variation in the torque is largely reduced. In addition, also when the thrust generating means moves at least either of the first and second sheaves in the tightening direction and in the axial direction, the first and second sheaves are rotated as one body, and it is unnecessary to rotate the first and second sheaves relative to each other, so that no slip would be generated between the belt and the first and second sheaves.

The invention as set forth in claim 2 resides in a transmission gear as set forth in claim 1, wherein the operational torque is a torque obtained by summing up a first torque component of the input torque which is transmitted to the first sheave and a second torque component of the input torque which is transmitted to the second sheave.

According to this, the operational torque is a torque obtained by summing up the first and second torque components transmitted through the first and second sheaves, i.e., the whole part of the input torque, so that the magnitude of the operational torque can be made to be equal to the magnitude of the input torque. Therefore, the thrust generated by the thrust generating means can be increased, as compared with the thrust generated by the related-art torque cam mechanism operated by the operational torque which is equal to only either of the first and second torque components, i.e., equal to a part of the input torque.

The invention as set forth in claim 3 resides in a transmission gear as set forth in claim 2, wherein the thrust generating means is a torque cam mechanism composed of a first cam element being rotatable as one body with the rotary shaft and being rotatable relative to the first sheave and the second sheave, and one second cam element which makes contact with the first cam element and to which the first torque component and the second torque component are transmitted.

According to this, the first and second torque components transmitted respectively through the first and second sheaves are transmitted to the one second cam element constituting the torque cam mechanism, so that the number of members for constituting the torque cam mechanism is reduced.

The invention as set forth in claim 4 resides in a transmission gear as set forth in claim 2 or 3, wherein the first sheave and the second sheave are coupled by a coupling means so as not to be rotatable relative to each other, and the coupling means is composed of a first spline and a second spline which are provided respectively in the first sheave and the second sheave and which are fitted to each other.

According to this, the fitting of the first and second splines to each other ensures that the first and second sheaves can be rotated in the state of being not rotatable relative to each other in the condition where they can be moved in the axial direction relative to each other. In addition, since the first and second sheaves are coupled over a comparatively wide range according to the widths of the first and second splines in the axial direction, the torsional rigidities of the first and second sheaves can be enhanced, as compared with the case where the first and second sheaves are rotatable relative to each other, so that the delay of transmission of the input torque transmitted from the variable pulley to the rotary shaft through the torque cam mechanism due to the torsion of the first and second sheaves is reduced.

The invention as set forth in claim 5 resides in a transmission gear as set forth in claim 4, wherein the coupling means includes a spacer which is disposed between the first spline and the second spline and which reduces the gap in the circumferential direction between the first spline and the second spline.

According to this, the gap in the circumferential direction between the first and second splines is reduced by the spacer, so that the relative movement in the axial direction of the first and second sheaves is made to be smooth, the delay from the time point when the thrust generating mechanism or the torque cam mechanism operates upon a variation in torque to the time point when the variable pulley tightens the belt by the thrust is reduced, and the tightening response performance in tightening the belt by the thrust is enhanced.

The invention as set forth in claim 6 resides in a transmission gear as set forth in claim 4 or 5, wherein the second cam element is provided in one sheave of the first sheave and the second sheave.

According to this, the first and second torque components transmitted respectively through the first and second sheaves are combined with each other through the coupling means, and the resultant torque is transmitted to the second cam element provided in one of the sheaves, so that the structure of the second cam element is simplified.

The invention as set forth in claim 7 resides in a transmission gear as set forth in claim 3, wherein the first cam element is provided in a rotary member which has a connection portion drive-connected to the rotary shaft and which is rotatable as one body with the rotary shaft, the second cam element is provided in the second sheave of the first sheave and the second sheave, the first sheave is disposed nearer to the belt than the connection portion in the axial direction, and the first sheave and the second sheave are coupled so as not to be rotatable relative to each other by a coupling means at a position nearer to the belt than the connection portion.

According to this, the first sheave is disposed nearer to the belt than the connection portion; therefore, the width in the axial direction of the first sheave is reduced, the torsional rigidity of the first sheave is enhanced, and the torsional rigidity of the first and second sheaves is enhanced by the coupling means provided nearer to the belt than the connection portion of the first and second sheaves, so that the delay of transmission of the input torque transmitted from the variable pulley to the rotary shaft through the torque cam mechanism due to the torsion of the first and second sheaves is reduced. In addition, the first and second torque components transmitted respectively through the first and second sheaves are combined with each other through the coupling means, and then the resultant torque is transmitted to the second cam element provided in one of the sheaves, so that the structure of the second cam element is simplified.

According to the invention as set forth in claim 1, the following effects are produced. Since the slip between the belt and the first and second sheaves at the time of a variation in torque is largely reduced by the increased belt tightening force, the transmission efficiency and transmission response performance in transmission of the input torque from the belt to the variable pulley at the time of a variation in torque are enhanced. In addition, since the slip between the belt and the first and second sheaves is not generated even when the thrust generating means moves at least either of the first and second sheaves in the tightening direction, the efficiency of transmission of the input torque from the belt to the variable pulley is enhanced also from this point of view.

According to the invention as set forth in claim 2, the magnitude of the operational torque can be made equal to the magnitude of the input torque, and, therefore, the same effects as those of the invention of claim 1 can be produced by the increased belt tightening force.

According to the invention as set forth in claim 3, the following effect is produced, in addition to the effects of the invention of the cited claim. Since the number of members constituting the torque cam mechanism is reduced, the torque cam mechanism to which the first and second torque components are transmitted is simplified.

According to the invention as set forth in claim 4, the following effects are produced, in addition to the effects of the invention of the cited claim. The coupling means for enabling the first and second sheaves to be rotated in the state of being not rotatable relative to each other in the condition where they are movable relative to each other in the axial direction is configured by use of a simple structure. Besides, the delay in transmission of the input torque transmitted from the variable pulley to the rotary shaft through the torque cam mechanism is reduced by the first and second splines, so that the transmission response performance in transmission of the input shaft from the variable pulley to the rotary torque is enhanced, in the transmission gear with the torque cam mechanism.

According to the invention as set forth in claim 5, the following effect is produced, in addition to the effects of the invention of the cited claim. Since the tightening response performance in tightening of the belt by the thrust is enhanced, the transmission response performance in transmission of the input torque from the belt to the variable pulley is enhanced.

According to the invention as set forth in claim 6, the following effect is produced, in addition to the effects of the invention of the cited claim. Since the structure of the second cam element is simplified, the torque cam mechanism to which the first and second torque components are transmitted is further simplified.

According to the invention as set forth in claim 7, the following effects are produced, in addition to the effects of the invention of the cited claim. Since the delay of transmission of the input torque transmitted from the variable pulley to the rotary shaft through the torque cam mechanism is reduced, the transmission response performance in transmission of the input torque from the variable pulley to the rotary shaft is enhanced in the transmission gear including a torque cam mechanism. In addition, since the structure of the second cam element is simplified, the torque cam mechanism to which the first and second torque components are transmitted is further simplified.

Now, embodiments of the present invention will be described below referring to Figs. 1 to 7.
Fig. 1 is a sectional view along a section including mainly a cylinder axis line and the rotation center lines of a crankshaft, a drive pulley, and a driven pulley, in a power unit comprising a V belt type automatic transmission of a motorcycle to which the present invention has been applied, and is a section along line I-I of Fig. 4(A) with respect to the driven pulley.
Fig. 2 is an enlarged sectional view of an essential part of Fig. 1.
Fig. 3 is a sectional view along line III-III of Fig. 2.
Fig. 4 (A) is a view along arrow IV of Fig. 2 of the movable pulley, and Fig. 4(B) is a sectional view along line B-B of Fig. 4 (A).
Fig. 5 (A) is a view along arrow V of Fig. 2 of a cam body, and Fig. 5(B) is a sectional view along line B-B of Fig. 5 (A).
Fig. 6 is a development of a torque cam mechanism provided in a transmission of Fig. 1, and a sectional view along line VI-VI of Fig. 5(A) with respect to the movable pulley and the cam body.
Fig. 7 is a graph showing the relationships among the thrust and springy force exerted on the driven pulley by the torque cam mechanism and a spring provided in the transmission of Fig. 1, the tightening force exerted on the belt by the driven pulley, and the wrapping radius of the belt at the driven pulley, and the relationships among the thrust, the springy force, the tightening force, and the wrapping radius in the related art.

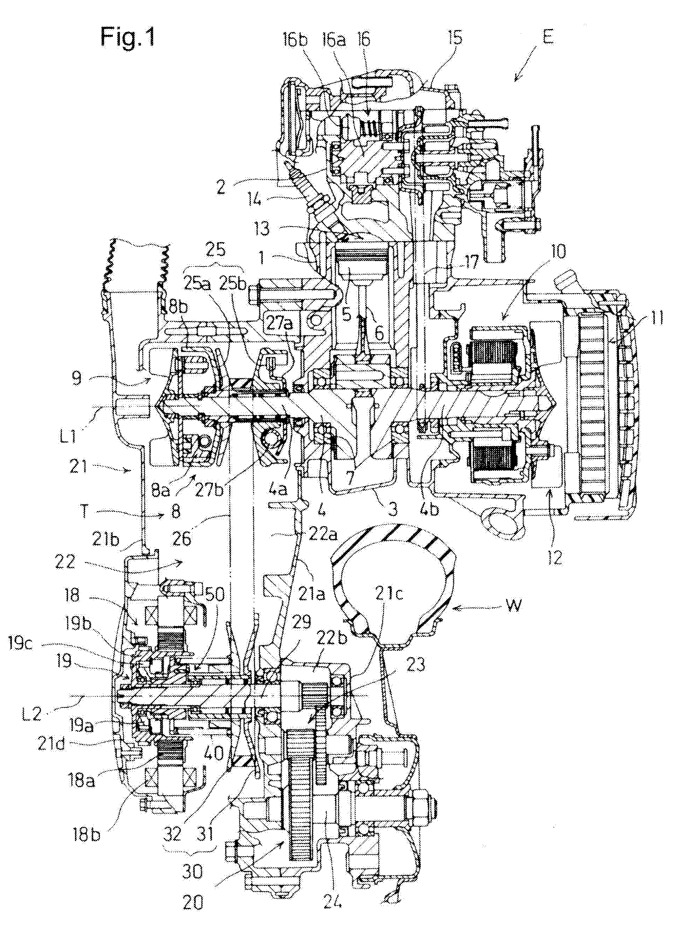

Referring to Fig. 1, a transmission gear according to the present invention is a V belt type automatic transmission T as a belt type transmission gear constituting a power transmission system mounted on a motorcycle serving as a vehicle. The power transmission system for transmitting the power of an internal combustion engine mounted on the motorcycle to a rear wheel W serving as a drive wheel constitutes a power unit of the motorcycle, together with the internal combustion engine E and an electric motor 18. The power unit is supported to be vertically swingable around a pivot shaft held by a vehicle body frame.

The internal combustion engine E as a main prime mover in the motorcycle is an overhead camshaft type single-cylinder 4-stroke internal combustion engine, which includes an engine main body composed of a cylinder 1 in which a piston 5 is reciprocatably fitted, a cylinder head 2 connected to one end portion of the cylinder 1, and a crankcase 3 connected to the other end portion of the cylinder 1. A crankshaft 4 connected to the piston 5 through a connecting rod 6 is disposed to be directed in the left-right direction of the motorcycle, and is rotatably supported on the cylinder 1 and the crankcase 3 through a pair of main bearings 7.

A first shaft end portion 4a of the crankshaft 4 protruding to the left from the crankcase 3 extends into a power transmission chamber 22 in which the transmission T is contained. A drive pulley 25 in the transmission T, a starting clutch 8, and a cooling fan 9 for introducing cooling air into the power transmission chamber 22 are mounted to the first shaft end portion 4a. On the other hand, a cooling fan 12 for introducing cooling airflow for cooling a rotor of an AC generator 10 and a radiator 11 is mounted to a second shaft end portion 4b of the crankshaft 4 protruding to the right from the crankcase 3.

The cylinder head 2 is provided with a combustion chamber 13 at a position opposed to the piston 5 in the cylinder axis direction, an intake port for leading to the combustion chamber 13 a fuel-air mixture formed in a carburetor provided in an intake device, and an exhaust port for leading a combustion gas from the combustion chamber to an exhaust device as an exhaust gas, and, further, a spark plug 14 fronting on the combustion chamber 13 is mounted to the cylinder head 2. A valve-operating system 16 for openingly and closingly operating an intake valve for opening and closing the intake port and an exhaust valve for opening and closing the exhaust port is contained in a valve-operating chamber which is defined by the cylinder head 2 and a head cover 15 connected to the cylinder head 2. The valve-operating system 16 includes a camshaft 16a rotatably supported on the cylinder head 2, and the camshaft 16a is driven to rotate at a speed of half of the rotating speed of the crankshaft 4 by a valve-operating drive mechanism including a timing chain 17. An intake cam and an exhaust cam provided on the camshaft 16a openingly and closingly operate the intake valve and the exhaust valve at predetermined timings in synchronism with the rotation of the crankshaft 4 respectively through rocker arms (in Fig. 1, the rocker arm 16b on the exhaust side is shown).

The motorcycle has the electric motor 18 as an auxiliary prime mover. The electric motor 18 is composed of a power generating electric motor having the function as a generator, and includes a rotor 18a rotatable as one body with an output shaft 29 drive-connected to the rear wheel W, and a stator coil 18b fixed to a fourth case of a transmission case 21 which will be described later. The electric motor 18 rotatingly drives the output shaft 29 so as to assist the power of the internal combustion engine E at the times of, for example, starting, acceleration and the like of the motorcycle, whereas at the time of deceleration of the motorcycle, for example, the electric motor 18 functions as a generator to recover the kinetic energy of the rear wheel W transmitted thereto through the output shaft 29 by converting the kinetic energy into electrical energy.

The power transmission system disposed in the area ranging from the left side to the rear side of the internal combustion engine E includes the transmission T, the starting clutch 8 composed of a centrifugal type clutch having a centrifugal weight 8a, a one-way clutch 19, a final speed reduction gear 20, and the transmission case 21 defining a power transmission chamber 22.

The transmission case 21 includes a first case portion 21a connected to left portions of the cylinder 1 and the crankcase 3, a second case portion 21b connected to a left portion of the first case portion 21a, a third case portion 21c connected to a rear portion of a right portion of the first case portion 21a, and a fourth case portion 21d connected to a rear portion of the second case portion 21b and covering the electric motor 18. The transmission T, the starting clutch 8, the cooling fan 9, the one-way clutch 19 and the electric motor 18 are contained in a first chamber 22a of the power transmission chamber 22 which is defined by the first, second, and fourth case portions 21a, 21b, 21d, whereas the final speed reduction gear 20 is contained in a second chamber 22b of the power transmission chamber 22 which is defined by the first and third case portions 21a, 21c and partitioned oil-tight from the first chamber 22a.

The transmission T includes the crankshaft 4 constituting a drive shaft, a drive pulley 25 as the variable pulley which is integrally rotatably drive-connected to the crankshaft 4 through the starting clutch 8, the output shaft 29 constituting a driven shaft as the rotary shaft which is rotatably supported on the first case portion 21a and the third case portion 21c, a driven pulley 30 as the variable pulley which is integrally rotatably drive-connected to the output shaft 29 through the one-way clutch 19, an endless belt 26 composed of a V belt which is wrapped around the drive pulley 25 and the driven pulley 30, a drive-side changing means for changing the wrapping radius of the belt 26 at the drive pulley 25, and a driven-side changing means for changing the wrapping radius of the belt 26 at the driven pulley 30.

The drive pulley 25 is a variable pulley which is composed of a fixed sheave 25a relatively non-rotatably connected to an output portion 8b of the starting clutch 8 and a movable sheave 25b non-rotatable relative to the fixed sheave 25a and movable in the axial direction and of which the relative position in the axial direction of the fixed sheave 25a and the movable sheave 25b is changed by the drive-side changing means so as to change the wrapping radius of the belt 26 clamped between the fixed sheave 25a and the movable sheave 25b. Also, the driven pulley 30 which will be described in detail later is a variable pulley which is composed of a fixed sheave 31 and a movable sheave 32 and of which the relative position in the axial direction of the fixed sheave 31 and the movable sheave 32 is changed by the driven-side changing means so as to change the wrapping radius of the belt 26 clamped between the fixed sheave 31 and the movable sheave 32.

Incidentally, in the present specification and the claims, the axial direction means the direction in which the rotation center line L1 of the drive pulley 25 (it is also the rotation center line of the crankshaft 4) and the rotation center line L2 of the driven pulley 30 being parallel to each other extend, and the radial direction is the radial direction with the rotation center line L2 as a center, unless otherwise specified.

In relation to the drive pulley 25, the drive-side changing means including a cam plate 27a integrally rotatably connected to the movable sheave 25b and a plurality of weight rollers 27b disposed between the movable sheave 25b and the cam plate 27a and movable under a centrifugal force moves the movable sheave 25b in the axial direction along the first shaft end portion 4a according to the rotating speed of the crankshaft 4, whereby the wrapping radius of the belt 26 at the drive pulley 25 is changed; simultaneously, in relation to the driven pulley 30, the driven-side changing means moves the movable sheave 32 along the output shaft 29 according to the tension of the belt 26 and the input torque transmitted from the belt 26 to the driven pulley 30 (hereinafter referred to as "the input torque"), whereby the wrapping radius of the belt 26 at the driven pulley 30 is changed. As a result of these changes, the speed change ratio in the transmission T is changed automatically and in a non-stage manner according to the engine speed of the internal combustion engine E.

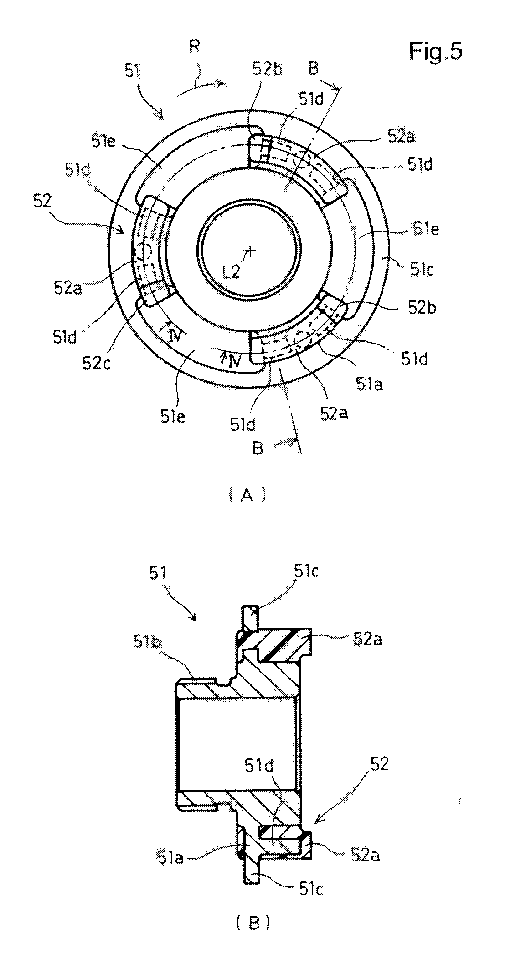

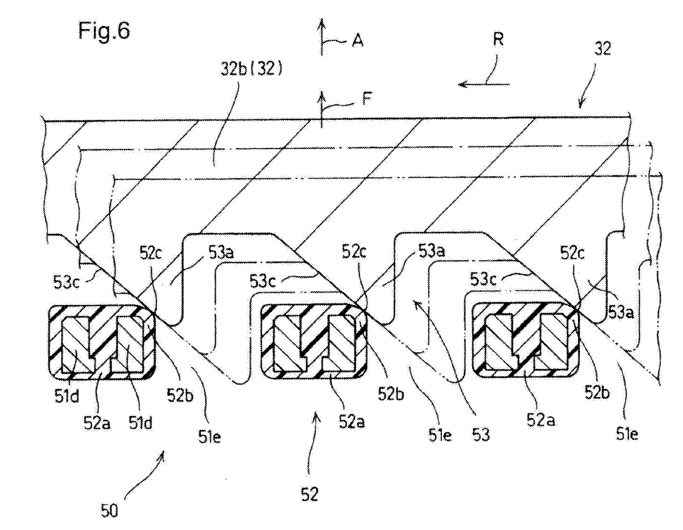

The one-way clutch 19 includes an inner portion 19a as an input portion integrally rotatably connected to a cam body 51 which will be described later, an outer portion 19b as an output portion integrally rotatably connected to the output shaft 29, and a multiplicity of rollers 19c as clutch elements disposed between the inner portion 19a and the outer portion 19b in the radial direction. The rollers 19c transmit and interrupt torque between the inner portion 19a and the outer portion 19b so as to transmit the rotation in the rotating direction R (see Figs. 5 and 6) as the forward rotation direction of the driven pulley 30 to the output shaft 29.

The final speed reduction gear 20 is composed of a gear train 23 serving as a speed reduction mechanism drive-connected to the output shaft 29, and the gear train 23 is drive-connected to an axle 24 to which the rear wheel W is connected to be always rotated as one body therewith.

The rotation of the crankshaft 4, which is driven to rotate by the piston 5 driven to reciprocate by the combustion pressure generated in the combustion chamber 13, is transmitted to the output shaft 29 while being changed in speed by the transmission T, and the transmitted rotation is further transmitted from the output shaft 29 to the axle 24 through the gear train 23, whereby the rear wheel W is driven to rotate by the power of the crankshaft 4.

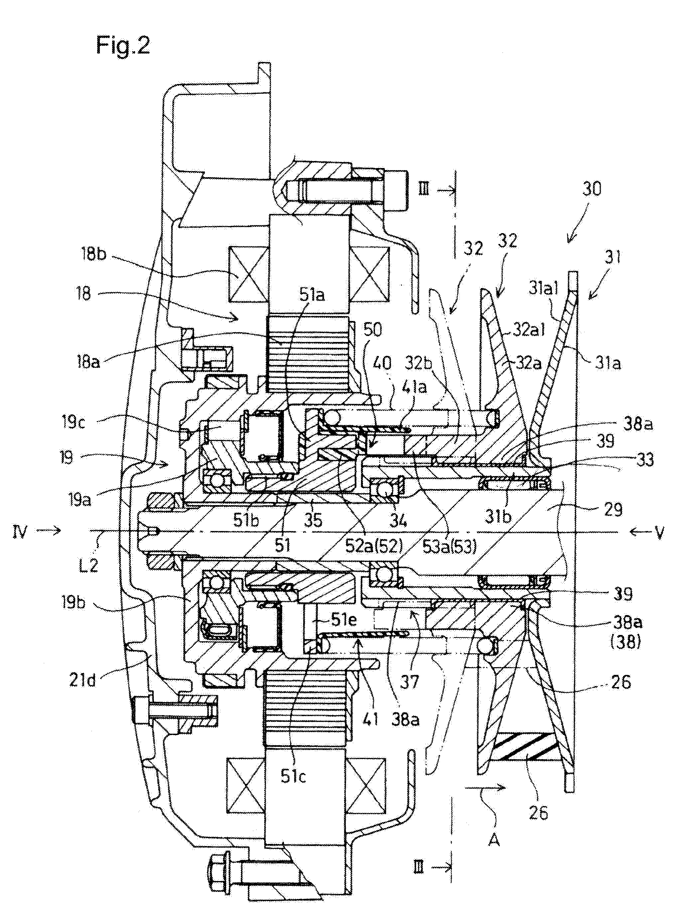

Description will be further made centered on the driven pulley 30, referring to Figs. 2 to 7.

Referring to Fig. 2, the fixed sheave 31 as a first sheave rotatably supported on the output shaft 29 through a pair of bearings 33, 34 in the state of being hindered from moving in the axial direction includes a flange 31a having a contact surface 31a1 for contact with the belt 26, and a hollow cylindrical sleeve 31b disposed on the outside of the output shaft 29 and integral with the flange 31a. Of the bearings 33, 34 disposed between the output shaft 29 and the sleeve 31b in the radial direction, the bearing 34 is inhibited from moving in the axial direction by the output shaft 29 and a hollow cylindrical restriction member 35 inhibited from moving in the axial direction relative to the output shaft 29, and the fixed sheave 31 is inhibited by the bearing 34 from moving in the axial direction.

The movable sheave 32 as a second sheave supported to be non-rotatable but movable in the axial direction relative to the fixed sheave 31 includes a flange 32a having a contact surface 32a1 for contact with the belt 26 and opposed to the contact surface 31a1 in the axial direction, and a hollow cylindrical sleeve 32b disposed coaxially on the outside of the sleeve 31b and integral with the flange 32a. Here, the term "non-rotatable relative to" includes the meaning of "slightly rotatable relative to" due to the presence of an inevitable gap generated based on the structure of a coupling means 36 which will be described later.

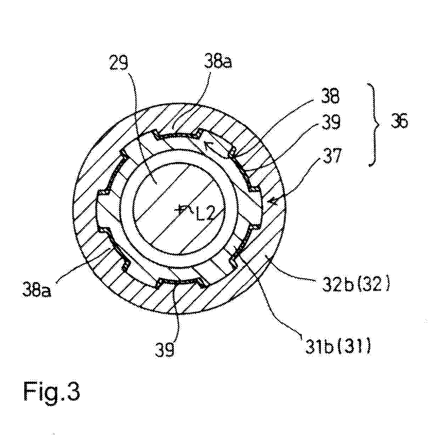

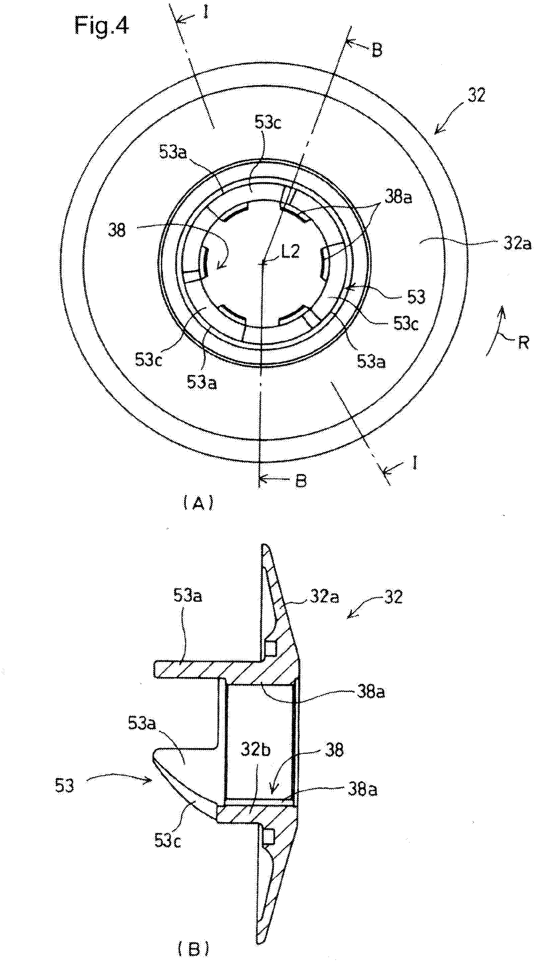

Referring to Figs. 3 and 4 also, the fixed sheave 31 and the movable sheave 32 are coupled with each other by the coupling means 36 in the condition where the movable sheave 32 is non-rotatable but movable in the axial direction relative to the fixed sheave 31. The coupling means 36 includes a first spline 37 as a first coupling element provided on the outer periphery of the sleeve 31b of the fixed sheave 31, a second spline 38 as a second coupling element provided on the inner periphery of the sleeve 32b of the movable sheave 32, and a plurality of (in this embodiment, six) spacers 39 disposed between the first spline 37 and the second spline 38. The second spline 38 has a width in the axial direction roughly equal to the width in the axial direction of the sleeve 32b, and both the splines 37 and 38 are always fitted to each other in the range in the axial direction in excess of half of the width in the axial direction of the sleeve 31b and over roughly the whole part of the width in the axial direction of the sleeve 32b.

Each of the spacers 39 is a member for reducing the gap in the circumferential direction and the gap in the radial direction between the first and second splines 37 and 38 and a cap-like member for covering the whole part of each spline rib 38a. Therefore, the first and second splines 37 and 38 composed of splines having an arbitrary sectional shape, in this embodiment, an angular sectional shape (see Fig. 3) are fitted to each other through the spacers 39. For smoothing the relative movement in the axial direction of both the sheaves 31 and 32, the spacers 39 are preferably composed of members formed of a low frictional coefficient material or members covered with a low frictional coefficient material.

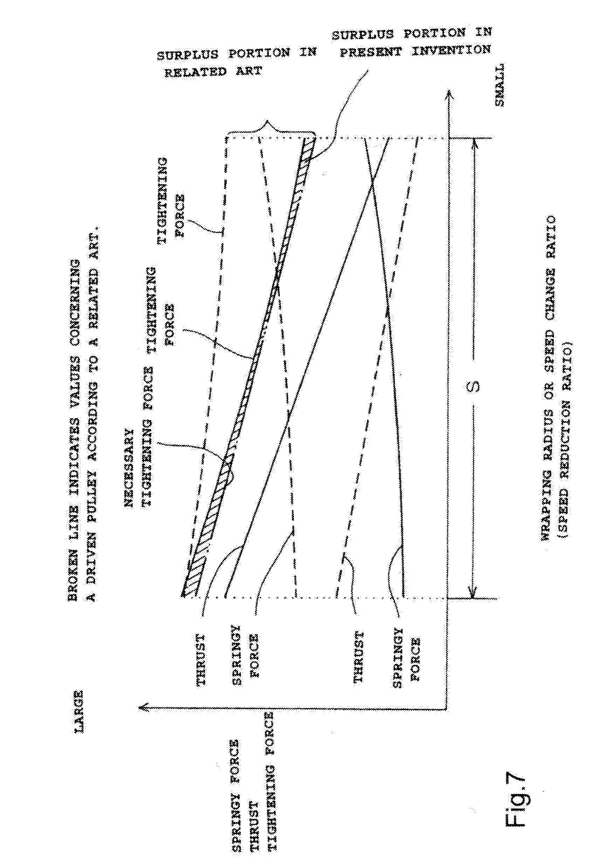

Referring to Fig. 2, the whole part of each of the sleeve 31b of the fixed sheave 31 and the sleeve 32b of the movable sheave 32 is disposed nearer to the belt 26 in the axial direction than the connection portion 51b of the cam body 51 which will be described later, and the whole part or roughly whole part of each of the sleeve 31b and the sleeve 32b is disposed nearer to the belt 26 than the cam body 51 in the axial direction. Moreover, the fixed sheave 31 and the movable sheave 32 are coupled by the coupling means 36 at a position nearer to the belt 26 than the connection portion 51b and the cam body 51, over the whole part of the moving range of the movable sheave 32 in the axial direction corresponding to the changing range S (see Fig. 7) of the wrapping radius of the belt 26 at the driven pulley 30. Incidentally, in Fig. 2, the positions of the movable sheave 32 corresponding to the maximum wrapping radius and the minimum wrapping radius of the belt 26 determining the changing range S are indicated by solid line and two-dotted chain line, respectively.

The driven-side changing means is a means for generating a force for bringing the movable sheave 32 and the fixed sheave 31 toward each other so as to tighten the belt 26 in the axial direction, and is composed of a spring 40 as a springy means and a torque cam mechanism 50 as a thrust generating means. The springy force generated by the spring 40 and the thrust F generated by the torque cam mechanism 50 produce a tightening force with which the driven pulley 30 tightens the belt 26 in the axial direction so as to secure a good efficiency of transmitting the input torque from the belt 26 to the driven pulley 30.

The spring 40 exerts on the movable sheave 32 a springy force in the tightening direction A for tightening the belt 26 in the axial direction, at a magnitude increased according to the position in the axial direction relative to the position of the movable sheave 32 corresponding to the maximum wrapping radius of the belt 26. The spring 40 composed of a hollow cylindrical compression coil spring is disposed between the cam body 51 integrally rotatably coupled to the output shaft 29 and the flange 32a of the movable sheave 32 in the state of being fitted on the outside of the sleeve 32b. One end portion of the spring 40 is held by a flange portion 51a of the cam body 51 through a spring guide member 41 having a hollow cylindrical guide portion 41a located on the inside of the spring 40, and the other end portion of the spring 40 is fitted in an annular groove formed in the flange 32a and held by the flange 32a.

The torque cam mechanism 50 operates by an operational torque (hereinafter referred to as "the operational torque") transmitted through the driven pulley 30 based on the input torque, has a size according to the operational torque, generates the thrust F (see Fig. 6) in the axial direction for tightening the belt 26, and exerts the thrust F on the movable sheave 32.

Specifically, the torque cam mechanism 50 is composed of one first cam element 52 provided as one body with the cam member 51 being a tubular rotary member disposed in series with the driven pulley 30 in the axial direction and coaxially on the outside of the output shaft 29, and one second cam element 53 provided on the movable sheave 32 and making contact with the first cam element 52.

Referring to Figs. 5 and 6 also, the cam body 51 restrained by the inner 19a of the one-way clutch 19 from moving in the direction opposite to the tightening direction A has a flange portion 51a constituting a holding portion 51c for holding the spring 40, and a connection portion 51b for connecting the cam body 51 to the inner portion 19a in an always integrally rotatable condition. The flange portion 51a is provided with the first cam element 52 on the inside in the radial direction relative to the holding portion 51c. In addition, the cam body 51 is drive-connected to the output shaft 29 through the connecting portion 51b composed of a spline, for example.

The first cam element 52 is composed of a plurality of (here, three) cam elements 52a provided at regular intervals along the circumferential direction. Each of the cam elements 52a is molded from a synthetic resin in such a manner that a projected portion 51d being a part of the flange portion 51a of the cam body 51 serves as a core material. Of each of the cam element 52a, a contact portion 52b having a cam surface 52c consisting of a spiral surface for contact with a cam surface 53c (see Fig. 4) of the second cam element 53 is formed of a synthetic resin. Between the cam elements 52a adjacent to each other in the circumferential direction, a through-hole 51e is provided to constitute a space into which the cam element 53a (described later) enters.

Referring to Figs. 2, 4 and 6, the second cam element 53 formed as one body with the movable sheave 32 is composed of a plurality of (here, three) cam elements 53a provided at regular intervals in the circumferential direction at an end portion, near the cam body 51, of the sleeve 32b of the movable sheave 32. The three cam elements 53a in respective contact with the three cam elements 52a are projected in a serrated form in the axial direction from the above-mentioned end portions, and have cam surfaces 53c composed of spiral surfaces in contact with the corresponding cam surfaces 52c.

As has been described above, the torque cam mechanism 50 for exerting on the movable sheave 32 the thrust F in the tightening direction A at a magnitude according to the magnitude of the operational torque moves the movable sheave 32 in the tightening direction A by the thrust F when a torque variation is generated between the driven pulley 30 and the output shaft 29 (hereinafter referred to as "the torque variation").

Specifically, the torque variation is generated in the cases where a load torque acting on the output shaft 29 is enlarged relative to the input torque acting on the driven pulley 30, such as the case where the load torque acting on the output shaft 29 is increased through the rear wheel W at the times of starting, acceleration, constant-speed running and the like of the motorcycle or the case where the input torque is reduced with an increase in the rotating speed of the driven pulley 30 at the times of acceleration operation of the internal combustion engine E and the like.

In the torque cam mechanism 50, where the second cam element 53 occupies a position between the position of the second cam element 53 (indicated by solid line in Fig. 6) in the condition of the maximum wrapping radius of the belt 26 at the driven pulley 30 (see Fig. 2) and the position of the second cam element 53 (indicated by two-dotted chain line in Fig. 6) in the condition of the minimum wrapping radius of the belt 26 at the driven pulley 30 as indicated by dot-dash line in Fig. 6, when the torque variation is generated, the operational torque cause the fixed sheave 31 and the movable sheave 32 coupled by the coupling means 36 (see Fig. 4) to rotate in the rotating direction R relative to the cam body 51 and the output shaft 29, so that the second cam element 53 is rotated in the rotating direction R relative to the first cam element 52, and the thrust F is generated due to the contact between the first cam element 52 and the second cam element 53. The thrust F moves the movable sheave 32 in the axial direction to enable an approach to the fixed sheave 31, and, in this instance, both the sheaves 31 and 32 tighten the belt 26.

Therefore, the fixed sheave 31 and the movable sheave 32 are drive-connected to the output shaft 29 through the torque cam mechanism 50, the cam body 51, and the one-way clutch 19, and are rotatable relative to the cam body 51 and the output shaft 29 in the range determined by the torque cam mechanism 50.

Meanwhile, the input torque for forming the operational torque for operating the torque cam mechanism 50 is bisected into a first torque component transmitted to the fixed sheave 31 and a second torque component transmitted to the movable sheave 32. The operational torque is equal to the torque obtained by summing up the first torque component transmitted to the fixed sheave 31 of the input torque and the second torque component transmitted to the movable sheave 32 of the input torque, i.e., equal to the whole of the input torque. Therefore, the first torque component is transmitted to the movable sheave 32 through the first and second splines 37, 38 constituting the coupling means 36, is combined with the second torque component at the movable sheave 32, i.e., the first and second torque components are combined with each other, and thereafter the combined torque is transmitted through the movable sheave 32 to the second cam element 53. The operational torque having a magnitude according to the magnitude of the input torque is correlated with the input torque so as to increase with an increase in the input torque, or the first and second torque components, and, therefore, the thrust F is correlated between the operational torque and the input torque so as to increase with an increase in the operational torque, namely, an increase in the input torque.

Therefore, as shown in Fig. 7, the thrust F generated by the torque cam mechanism 50 is increased, as compared with the thrust generated by a related-art torque cam mechanism in which the operational torque is formed by a torque component transmitted through only the movable sheave 32 of the input torque (the operational torque is a part of the input torque, and is about half of the input torque). Therefore, in the tightening force obtained by summing up the springy force of the spring and the thrust F, the ratio occupied by the springy force of the spring 40 can be reduced, and the springy force can be largely reduced, as compared with that in the related art. In the changing range S of the wrapping radius, i.e., in the changing range S of the speed change ratio (which is also the speed reduction ratio), generation of an excessively large tightening force relative to the necessary tightening force is prevented, and the surplus of the tightening force is reduced as the wrapping radius (speed change ratio) is reduced.

Now, the functions and effects of the embodiment configured as above-described will be described below.

In the transmission T, the fixed sheave 31 and the movable sheave 32 are relatively non-rotatable and are drive-connected to the output shaft 29 through the torque cam mechanism 50, whereby the fixed sheave 31 and the movable sheave 32 are non-rotatable relative to each other. Therefore, the operational torque for operating the torque cam mechanism 50 for generating the thrust F for moving the movable sheave 32 in the tightening direction A at the time of the torque variation is based on the input torque transmitted through both of the fixed sheave 31 and the movable sheave 32 which are non-rotatable relative to each other. Accordingly, the thrust generated by the torque cam mechanism 50 is increased, as compared with the thrust generated by the related-art torque cam mechanism in which the operational torque is transmitted through the movable sheave due to the relative rotation of the fixed sheave and the movable sheave.

In this instance, the operational torque is a torque obtained by summing up the first torque component transmitted to the fixed sheave 31 of the input torque and the second torque component transmitted to the movable sheave 32 of the input torque, so that the operational torque is equal to a torque obtained by summing up the first and second torque components transmitted through the fixed sheave 31 and the movable sheave 32, i.e., equal to the whole part of the input torque. Therefore, the magnitude of the operational torque can be made equal to the magnitude of the input torque, so that the thrust F generated by the torque cam mechanism 50 can be increased, as compared with the thrust generated by the related-art torque cam mechanism in which only either one of the first and second torque components, i.e., a part of the input torque serves as the operational torque.

Thus, the tightening force for the belt 26 and, hence, the side pressure acting on the belt 26 when the movable sheave 32 moves in the tightening direction A at the time of the torque variation can be increased, and slips between the belt 26 and the fixed sheave 31 and the movable sheave 32 at the time of the torque variation are largely reduced.

As a result, the transmission efficiency and transmission response performance in transmission of the input torque from the belt 26 to the driven pulley 30 at the time of the torque variation are enhanced. In addition, also when the torque cam mechanism 50 moves the movable sheave 32 in the axial direction in the tightening direction A, the fixed sheave 31 and the movable sheave 32 are rotated as one body, and it is unnecessary to put both the sheaves 31, 32 into relative rotation, so that no slip is generated between the belt 26 and both the sheaves 31, 32, and the transmission efficiency in transmission of the input torque from the belt 26 to the driven pulley 30 is enhanced also from this point of view.

With the transmission efficiency and transmission response performance in transmission of the input torque to the driven pulley 30 enhanced, the response performance of the motorcycle corresponding to an output operation of the internal combustion engine E such as a throttle operation by the driver is enhanced, the driving feeling is enhanced, and, moreover, the running fuel consumption performance is enhanced.

Since the thrust F generated by the torque cam mechanism 50 is increased as compared with the thrust generated by the related-art torque cam mechanism, the ratio occupied by the springy force of the spring 40 in the tightening force can be reduced, the springy force can be largely reduced as compared with that in the related art, so that generation of an excessively large tightening force relative to the necessary tightening force in the changing range S of the wrapping radius is prevented.

Since the torque cam mechanism 50 is composed of the first cam element 52 which is rotatable as one body with the output shaft 29 and which is rotatable relative to the fixed sheave 31 and the movable sheave 32 and the one second cam element 53 which makes contact with the first cam element 52 and to which the first torque component and the second torque component are transmitted, the first and second torque components transmitted respectively through the fixed sheave 31 and the movable sheave 32 are transmitted to the one second cam element 53 constituting the torque cam mechanism 50, so that the number of members constituting the torque cam mechanism 50 is reduced, and the torque cam mechanism 50 to which the first and second torque components are transmitted is simplified.

The fixed sheave 31 and the movable sheave 32 are relatively non-rotatably coupled by the coupling means 36, and the coupling means 36 is composed of the first spline 37 and the second spline 38 which are provided respectively in the fixed sheave 31 and the second sheave 32 and which are fitted to each other. Therefore, the mutual fitting of the first and second splines 37, 38 enables both the sheaves 31, 32 to be rotated in the relatively non-rotatable mode in the condition where they can be relatively moved in the axial direction, so that the coupling means for enabling both the sheaves 31, 32 to be rotatable in the relatively non-rotatable mode in the condition where they can be relatively moved in the axial direction is configured by use of a simple structure. In addition, the fixed sheave 31 and the movable sheave 32 are coupled over a comparatively wide range according to the width in the axial direction of the first and second splines 37, 38, specifically over the range in the axial direction in excess of half of the width in the axial direction of the sleeve 31b of the fixed sheave 31, and over roughly the whole part of the width in the axial direction of the sleeve 32b of the movable sheave 32, whereby the torsional rigidities of both the sheaves 31, 32 are enhanced, as compared with the case where a fixed sheave and a movable sheave of a driven pulley are rotatable relative to each other. Therefore, the delay of transmission of the input torque from the driven pulley 30 to the output shaft 29 through the torque cam mechanism 50 due to the torsion of both the sheaves 31, 32 is reduced, so that the transmission response performance in transmission of the input torque from the driven pulley 30 to the output shaft 29 is enhanced in the transmission T with the torque cam mechanism 50.

Since the coupling means 36 includes the spacers 39 which are disposed between the first spline 37 and the second spline 38 and which reduces the gap in the circumferential direction between the first spline 37 and the second spline 38, the gap in the circumferential direction between the first and the second splines 37, 38 is reduced by the spacers 39, so that the movement of the movable sheave 32 in the axial direction relative to the fixed sheave 31 is smoothened. Therefore, the delay from the time when the torque cam mechanism 50 operates upon the torque variation to the time when the driven pulley 30 tightens the belt 26 by the thrust F is reduced, and the tightening response performance in tightening the belt 26 by the thrust F is enhanced, so that the transmission response performance in transmission of the input torque from the belt 26 to the driven pulley 30 is enhanced. In addition, with the spacers 39 composed of low frictional coefficient members, the movement of the movable sheave 32 is further smoothened, and the tightening response performance for the belt 26 and the transmission response performance of the input torque are further enhanced.

Since the second cam element 53 is provided on the movable sheave 32 which is one of the two sheaves of the driven pulley 30, the first and second torque components transmitted respectively through the fixed sheave 31 and the movable sheave 32 are combined through the coupling means 36, and then the combined torque is transmitted to the second cam element 53 provided on the movable sheave 32, so that the structure of the second cam element 53 is simplified, and the torque cam mechanism 50 to which the first and second torque components are transmitted is further simplified.

The first cam element 52 is provided on the cam body 51 having the connection portion 51b drive-connected to the output shaft 29 and being rotatable as one body with the output shaft 29, the second cam element 53 is provided on the movable sheave 32, the sleeve 31b of the fixed sheave 31 is disposed nearer to the belt 26 than the connection portion 51b in the axial direction, and the fixed sheave 31 and the movable sheave 32 are relatively non-rotatably coupled by the coupling means 36 at a position nearer to the belt 26 than the connection portion 51b. Therefore, the fixed sheave 31 is disposed nearer to the belt 26 than the connection portion 51b in the axial direction, with the result that the width in the axial direction of the sleeve 31b of the fixed sheave 31 is reduced and the torsional rigidity of the fixed sheave 31 is enhanced and that the torsional rigidities of both the sheaves 31, 32 are enhanced by the coupling means 36 provided nearer to the belt 26 than the connection portion 51b.

Accordingly, the delay in transmission of the input torque from the driven pulley 30 to the output shaft 29 through the torque cam mechanism 50 due to the torsion of both the sheaves 31, 32 is reduced, so that the transmission response performance in transmission of the input torque from the driven pulley 30 to the output shaft 29 is enhanced in the transmission T with the torque cam mechanism 50.

Besides, the whole part or roughly whole part of each of the sleeve 31b of the fixed sheave 31 and the sleeve 32b of the movable sheave 32 is disposed nearer to the belt 26 in the axial direction than the cam body 51, whereby the width in the axial direction of each of the sleeves 31b, 32b is further reduced, and the torsional rigidities of both the sheaves 31, 32 are further enhanced.

Now, modified embodiments obtained by modifying part of the configuration of the above-described embodiment will be described below, referring principally to the modified configurations.

The first and second coupling elements constituting the coupling means 36 may be composed of a pin and a member provided with a groove or slot in which the pin is to be inserted.

The cam body 51 may be formed as one body with another member rotatable as one body with the output shaft 29, for example, the inner 19a of the one-way clutch 19; in that case, the connection portion 51b of the cam body 51 is a portion located on the opposite side of the belt 26 in the axial direction with reference to the first cam element 52.

In the torque cam mechanism 50, either one cam element of the first and second cam elements 52, 53 may be a roller making contact with the cam surface of the other cam element.

While the movable sheave 32 as one of the first and second sheaves of the driven pulley 30 is movable in the axial direction in the above-described embodiment, it suffices that at least one of the first and second sheeves is movable in the axial direction, i.e., one of the sheaves is movable relative to the other sheave. In the case where both of the first and second sheaves are movable, the torque cam mechanism may be composed of separate torque cam mechanisms provided in correspondence with the sheaves. For example, the torque cam mechanism may be composed of one first cam element and two second cam elements, or may be composed of two first cam elements and two second cam elements.

The second cam element may be provided on one of the fixed sheave and the movable sheave, and the other of the fixed sheave and the movable sheave may be connected directly to the second cam element without intermediation by the one sheave so that the first and second torque components are combined at the second cam element to form the operational torque.

The drive pulley 25 may be integrally rotatably coupled to a drive shaft constituted of a rotary shaft other than the crankshaft 4, and the driven pulley 30 may be integrally rotatably coupled to a driven shaft constituted of a rotary shaft other than the output shaft 29. Besides, the transmission gear according to the present invention may be a belt type transmission other than the V belt type automatic transmission, and may be a transmission gear for use in a vehicle other than a motorcycle or in a machine other than a vehicle.

## Claims

1. A transmission gear (T) comprising a variable pulley (30) comprised of a first sheave (31) and a second sheave (32), a rotary shaft (29) drive-connected to said variable pulley (30), and a thrust generating means (50) for generating a thrust (F) in the axial direction according to an operational torque transmitted through said variable pulley (30) on the basis of an input torque transmitted from a belt (26) clamped by said first sheave (31) and said second sheave (32) to said variable pulley (30), said thrust generating means (50) moving at least either of said first sheave (31) and said second sheave (32) in the direction for tightening said belt (26) by said thrust (F) at the time of a variation in torque between said variable pulley (30) and said rotary shaft (29), wherein
said first sheave (31) and said second sheave (32) are not rotatable relative to each other, and are drive-connected to said rotary shaft (29) through said thrust generating means (50).

2. A transmission gear as set forth in claim 1, wherein said operational torque is a torque obtained by summing up a first torque component of said input torque which is transmitted to said first sheave (31) and a second torque component of said input torque which is transmitted to said second sheave (32).

3. A transmission gear as set forth in claim 2, wherein said thrust generating means is a torque cam mechanism (50) comprised of a first cam element (52) being rotatable as one body with said rotary shaft (29) and being rotatable relative to said first sheave (31) and said second sheave (32), and one second cam element (53) which makes contact with said first cam element (52) and to which said first torque component and said second torque component are transmitted.

4. A transmission gear as set forth in claim 2 or 3, wherein said first sheave (31) and said second sheave (32) are coupled by a coupling means (36) so as not to be rotatable relative to each other, and said coupling means (36) is comprised of a first spline (37) and a second spline (38) which are provided respectively in said first sheave (31) and said second sheave (32) and which are fitted to each other.

5. A transmission gear as set forth in claim 4, wherein said coupling means (36) includes a spacer (39) which is disposed between said first spline (37) and said second spline (38) and which reduces the gap in the circumferential direction between said first spline (37) and said second spline (38).

6. A transmission gear as set forth in claim 4 or 5, wherein said second cam element (53) is provided in one sheave of said first sheave (31) and said second sheave (32).

7. A transmission gear as set forth in claim 3, wherein said first cam element (52) is provided in a rotary member (51) which has a connection portion (51b) drive-connected to said rotary shaft (29) and which is rotatable as one body with said rotary shaft (29), said second cam element (53) is provided in said second sheave (32) of said first sheave (31) and said second sheave (32), said first sheave (31) is disposed nearer to said belt (26) than said connection portion (51b) in said axial direction, and said first sheave (31) and said second sheave (32) are coupled so as not to be rotatable relative to each other by a coupling means (36) at a position nearer to said belt (26) than said connection portion (51b).
